# EUROPEAN PATENT SPECIFICATION

(11) **EP 3 585 629 B1**
(45) Date of publication and mention of the grant of the patent: **29.09.2021**
(21) Application number: 18706848.1
(22) Date of filing: 19.02.2018
(51) Int. Cl.: B60B 33/00, B60C 23/10, B60B 19/14, B60C 23/00

(54) **LOAD CARRYING DEVICE**
LASTTRAGVORRICHTUNG
DISPOSITIF DE TRANSPORT DE CHARGE

(30) Priority: 21.02.2017 GB 201702802
(43) Date of publication of application: 01.01.2020
(73) Proprietor: Area 52 Limited, Aberdeenshire AB39 2DB (GB)
(72) Inventor: TUTT, Matthew Karl, Aberdeenshire AB39 2DB (GB); SENIOR, Stephen Paul Wilding, Aberdeenshire AB39 2DB (GB)
(74) Representative: Appleyard Lees IP LLP
(86) International application number: PCT/GB2018/050430
(87) International publication number: WO 2018/154281

(56) References cited:
- DE-A1- 10 247 700
- GB-A- 2 469 675
- US-A- 3 827 369

## Description

The invention relates to a load carrying device and a roller for a load carrying device.

Load carrying devices (such as prams and golf trolleys) typically include wheels to support the load carrying device and to allow movement of the device by rotation of the wheels. Wheels can be bulky, which means that they take up a lot of space when storing or transporting a load carrying device. Additionally, the ride provided to the load carrying device by wheels can be firm, and it can be difficult to manoeuvre load carrying devices having wheels on some terrain (such as steps, stairs, kerbs, sand, grass and onto/off public transport).

Background art is shown, for example, in: DE10247700, which discloses a tire pressure adjustment system for pumping up or reducing the pressure in the tires of a wheeled vehicle, especially a bicycle, comprises a pressure generation or reduction device incorporated in the wheel hub; and US3827369, which discloses a wheelbarrow having a spherical wheel.

According to a first aspect of the invention, there is provided a load carrying device as defined in the claims that follow.

The load carrying device is advantageous as it means that when the load carrying device is not being used for load carrying, the inflation arrangement can be operated to deflate the roller to its deflated state, so that the load carrying device takes up less space during storage or transportation of the load carrying device. Additionally, the inflated roller offers increased shock absorption. Having the inflation arrangement in connection with the roller means that the inflation arrangement can be operated to selectively inflate/deflate the roller without needing to connect/disconnect the inflation arrangement to/from the roller in between using the load carrying device and storing the loading carrying device. Typically, the connection between the inflation arrangement and the roller is fluid communication between the inflation arrangement and the body of the roller. However, the connection between the inflation arrangement and the roller may be an electrical or mechanical connection. The electrical connection may be a wireless connection.

In the invention as claimed, the roller is a ball. The ball provides a softer ride for the load carrying device. Additionally, the ball means that the load carrying device can be pushed more easily over uneven terrain such as steps, stairs, kerbs, sand, grass and onto/off public transport. Additionally, the ball reduces damage to surfaces such as fine turf.

In one example, the attachment arrangement comprises at least one connector connecting to an axle of the roller. The axle provides a simple to manufacture arrangement for attaching the roller to the load carrying portion while allowing the roller to rotate.

In the invention as claimed, the inflation arrangement provides the axle. This reduces the space required within the roller for the inflation arrangement/axle, allowing a greater inflation volume to be provided, thereby providing a softer ride, and makes the inflation arrangement/axle to occupy a smaller footprint, which reduces the weight and likelihood of damage of the load carrying device.

In one example, the inflation arrangement extends across a width of the roller. This provides greater stability and allows the inflation arrangement to be fixed in position with respect to the roller more easily.

In the invention as claimed, the inflation arrangement is at least partially located within the roller. This reduces space occupied by the inflation arrangement in the load carrying device and reduces the likelihood of interference of the inflation arrangement with the load carrying portion. Having some of the inflation arrangement located outside the roller allows it to be accessed more easily by the user. In one example, the inflation arrangement is fully located within the roller. This further reduces space occupied by the inflation arrangement in the load carrying device and reduces the likelihood of interfere of the inflation arrangement with the load carrying portion.

In one example, the inflation arrangement comprises a first guard member on a first end cap of the inflation arrangement, the first guard member extending outwardly from the inflation arrangement to protect the inflation arrangement from radial or sideways impact.

In one example, the inflation arrangement comprises a second guard member on a second end cap of the inflation arrangement, the second guard member extending outwardly from the inflation arrangement to protect the inflation arrangement from radial or sideways impact.

In one example, the inflation arrangement is a module removable from the roller. This means that if one of the roller or the inflation arrangement is damaged or broken, it can be easily replaced or repaired independently from the other.

In one example, the body of the roller comprises a first port, the inflation arrangement insertable into and removable from the roller through the first port. This provides a simple and easy to manufacture means by which the inflation arrangement is removable from the roller. The first port also provides access to the inflation arrangement.

In one example, the body of the roller comprises a second port, wherein the first end cap is located at the first port and the second end cap is located at the second port. The second port provides further access to the inflation arrangement.

In one example, the second cap has a larger diameter than the second port and a smaller diameter than the first port. This means that the inflation arrangement is insertable into and removable from the roller through the first port (by inserting the second cap through the first port), but the inflation arrangement cannot be moved out of the roller through the second port (as the second cap cannot pass through the second port), thereby helping to retain the inflation arrangement within the roller.

In one example, the first cap has a larger diameter than the first port. This prevents the first cap being inserted through the first port, thereby helping the inflation arrangement to be inserted in the correct position in the roller.

In one example, the inflation arrangement comprises a pump. This is a simple and rapid means for inflating and/or deflating the roller.

In one example, the inflation arrangement comprises first and second valves, the pump switchable between: an inflating mode, wherein the pump supplies air to the body through the first and second valves to inflate the roller; and a deflating mode, wherein the pump draws air from the body through the second and first valves to deflate the roller. Using first and second valvles in this way provides a reliable and simple means by which the roller can be inflated and can be readily retained in the deflated state.

In one example, the first and second valves are shuttle valves, the first valve comprising: a first valve first opening, opening external to the roller; a first valve second opening, opening to a suction side of the pump; and a first valve third opening, opening to the body, wherein the second valve comprises: a second valve first opening, opening external to the roller; a second valve second opening, opening to a pressure side of the pump; and a second valve third opening, opening to the body, wherein in the inflating mode, the first valve permits fluid between the first valve first opening and the first valve second opening and the second valve permits fluid flow between the second valve second opening and the second valve third opening, and, in the deflating mode, the first valve permits fluid flow between the first valve third opening and the first valve second opening and the second valve permits fluid flow between the second valve second opening and the second valve first opening.

Using this arrangement of the two valves means that the pump can be driven in one direction and remain in the same position, but can inflate and deflate the roller by switching the pump. Additionally, the pump is located within a chamber of the inflation arrangement. This simplifies the construction of the inflation arrangement.

In one example, the first valve and the second valve are operable by mechanical linkage. In one example, the first valve and the second valve are operable by (e.g. remote) electrical, mechanical, or electromechanical actuation. This allows the first valve and the second valve to be operated remotely (e.g. from a handle of the load carrying device).

In one example, each of the first valve and the second valve is located in a respective one of a first end cap and a second end cap of the inflation arrangement. This allows the valves to be positioned close to the surface of the roller so that they may more easily draw/supply air to/from the outside, and/or be accessed by a user or control devices.

In one example, the roller comprises a plurality of structural members. In one example, each of the structural member extends circumferentially around the roller when the roller is inflated. This provides further structural support to the roller when the roller is in the inflated state and/or guides inflation/deflation of the ball.

In one example, each of the structural members extends parallel to the inflation arrangement when the roller is in the deflated state.

In one example, wherein the pump is driven by a first motor and operation of the first motor is controlled by a pressure sensor.

In one example, the load carrying device comprises a second motor operable to rotate the roller to move the load carrying device. This means that the load carrying device can be driven, reducing the effort required by the user of the load carrying device.

In one example, the load carrying device comprises a third motor operable to rotate the roller to move the load carrying device, wherein the second motor is located at the first end cap and the third motor is located at the second end cap. This provides more even driving of the roller and more balanced loading on the roller.

In one example, the body of the roller is made from a puncture resistant material.

In one example, the load carrying device is a pram/buggy, for carrying young children. The roller means that the pram can be pushed more easily over uneven terrain such as steps, stairs, kerbs, sand, grass and onto/off public transport. The pram/buggy is advantageous as it means that when the pram/buggy is not being used for load carrying, the inflation arrangement can be operated to deflate the roller to its deflated state, so that the pram/buggy takes up less space during storage or transportation of the pram/buggy, for example in a car boot. Additionally, the inflated roller offers increased shock absorption.

In one example, the load carrying device is a golf trolley/buggy, for carrying golf clubs. The roller means that the golf trolley can be pushed more easily over uneven terrain and reduces damage to surfaces such as fine turf on a golf course. The golf trolley/buggy is advantageous as it means that when the golf trolley/buggy is not being used for load carrying, the inflation arrangement can be operated to deflate the roller to its deflated state, so that the golf trolley/buggy takes up less space during storage or transportation of the golf trolley/buggy, for example in a car boot. Additionally, the inflated roller offers increased shock absorption.

According to a second aspect of the invention, there is provided a kit of parts for a load carrying device, as defined in the claims that follow. The parts of the kit of parts can be assembled to give a load carrying device having the features and advantages described above.

According to a third aspect of the invention, there is provided a roller for a load carrying device, as defined in the claims that follow.

The roller is advantageous when used with a load carrying device as it means that when the load carrying device is not being used for load carrying, the inflation arrangement can be operated to deflate the roller to its deflated state, so that the load carrying device takes up less space during storage or transportation of the load carrying device. In one example, the inflation arrangement is in (e.g. permanent) connection with the roller for selectively inflating the roller from a deflated state to an inflated state and for selectively deflating the roller from the inflated state to the deflated state. The connection might be such that free rotation of the roller is possible.

In the invention as claimed, the roller is a ball. The ball provides a softer ride for the load carrying device. Additionally, when used with the load carrying device, the ball allows the load carrying device to be pushed more easily over uneven terrain such as steps, stairs, kerbs, sand, grass and onto/off public transport. Additionally, the ball reduces damage to surfaces such as fine turf.

In one example, the attachment arrangement comprises at least one connector connecting to an axle of the roller. The axle provides a simple to manufacture arrangement for attaching the roller to the load carrying portion while allowing the roller to rotate.

In the invention as claimed, the inflation arrangement provides the axle. This reduces the space required within the roller for the inflation arrangement/axle, allowing a greater inflation volume to be provided, thereby providing a softer ride and makes the inflation arrangement/axle occupy a smaller footprint, which reduces the weight and likelihood of damage of the load carrying device.

In the invention as claimed, the inflation arrangement is at least partially located within the roller. When the roller is attached to the load carrying device, this reduces space occupied by the inflation arrangement in the load carrying device and reduces the likelihood of interference of the inflation arrangement with the load carrying portion. Having some of the inflation arrangement located outside the roller allows it to be accessed more easily by the user. In one example, the inflation arrangement is fully located within the roller. This further reduces space occupied by the inflation arrangement in the load carrying device and reduces the likelihood of interfere of the inflation arrangement with the load carrying portion.

In one example, the inflation arrangement comprises a first guard member on the first end cap of the inflation arrangement, the first guard member extending outwardly from the inflation arrangement to protect the inflation arrangement from radial or sideways impact.

In one example, the inflation arrangement comprises a second guard member on the second end cap of the inflation arrangement, the second guard member extending outwardly from the inflation arrangement to protect the inflation arrangement from radial or sideways impact.

In one example, the inflation arrangement is a module removable from the roller. This means that if one of the roller or the inflation arrangement is damaged or broken, it can be easily replaced or repaired independently from the other.

In one example, the body of the roller comprises a first port, the inflation arrangement insertable into and removable from the roller through the first port. This provides a simple and easy to manufacture means by which the inflation arrangement is removable from the roller. The first port also provides access to the inflation arrangement.

In one example, the body of the roller comprises a second port, wherein the first end cap is located at the first port and the second end cap is located at the second port. The second port provides further access to the inflation arrangement.

In one example, the second cap has a larger diameter than the second port and a smaller diameter than the first port. This means that the inflation arrangement is insertable into and removable from the roller through the first port (by inserting the second cap through the first port), but the inflation arrangement cannot be moved out of the roller through the second port (as the second cap cannot pass through the second port), thereby helping to retain the inflation arrangement within the roller.

In one example, the first cap has a larger diameter than the first port. This prevents the first cap being inserted through the first port, thereby helping the inflation arrangement to be inserted in its correct position in the roller.

In one example, the inflation arrangement comprises a pump. This is a simple and rapid means for inflating and/or deflating the roller.

In one example, the inflation arrangement comprises first and second valves, the pump switchable between: an inflating mode, wherein the pump supplies air to the body through the first and second valves to inflate the roller; and a deflating mode, wherein the pump draws air from the body through the second and first valves to deflate the roller. Using first and second valves in this way provides a reliable and simple means by which the roller can be inflated and can be readily retained in the deflated state.

In one example, the first and second valves are shuttle valves, the first valve comprising: a first valve first opening, opening external to the roller; a first valve second opening, opening to a suction side of the pump; and a first valve third opening, opening to the body, wherein the second valve comprises: a second valve first opening, opening external to the roller; a second valve second opening, opening to a pressure side of the pump; and a second valve third opening, opening to the body, wherein in the inflating mode, the first valve permits fluid between the first valve first opening and the first valve second opening and the second valve permits fluid flow between the second valve second opening and the second valve third opening, and, in the deflating mode, the first valve permits fluid flow between the first valve third opening and the first valve second opening and the second valve permits fluid flow between the second valve second opening and the second valve first opening. Using this arrangement of the two valves means that the pump can be driven in one direction and remain in the same position, but can inflate and deflate the roller by switching the pump. Additionally, the pump is located within a chamber of the inflation arrangement. This simplifies the construction of the inflation arrangement.

In one example, the first valve and the second valve are operable by mechanical linkage. In one example, the first valve and the second valve are operable by (e.g. remote) electrical, mechanical, or electromechanical actuation. This allows the first valve and the second valve to be operated remotely (e.g. from a handle of the load carrying device).

In one example, the inflation arrangement extends across a width of the roller. This provides greater stability and allows the inflation arrangement to be fixed in position with respect to the roller more easily.

In one example, each of the first valve and the second valve is located in a respective one of a first end cap and a second end cap of the inflation arrangement. This allows the valves to be positioned close to the surface of the roller so that they may more easily draw/supply air to/from the outside, and/or be accessed by a user or control devices.

In one example, the roller comprises a plurality of structural members. In one example, each of the structural member extends circumferentially around the roller when the roller is in the inflated state. This provides further structural support to the roller when the roller is in the inflated state, and/or guides inflation/deflation of the ball.

In one example, each of the structural members extends parallel to the inflation arrangement when the ball is in the deflated state.

In one example, the pump is driven by a first motor and operation of the first motor is controlled by a pressure sensor.

In one example, the roller comprises a second motor operable to rotate the roller to move the load carrying device. This means that the load carrying device can be driven, reducing the effort required by the user of the load carrying device.

In one example, the roller comprises comprising a third motor operable to rotate the roller to move the load carrying device, wherein the second motor is located on the first side of the roller and the third motor is located on the second side of the roller. This provides more even driving of the roller and more balanced loading on the roller.

According to a fourth aspect of the invention, there is provided a pram comprising a load carrying portion and a roller as defined in the claims that follow. The fourth aspect of the invention may be employed in combination with any of the features of the first to third aspects as described above.

According to a fifth aspect of the invention, there is provided a golf trolley comprising a load carrying portion and a roller as defined in the claims that follow. The fifth aspect of the invention may be employed in combination with any of the features of the first to third aspects as described above.

For a better understanding of the invention reference is made, by way of example only, to the accompanying drawings, in which:
Fig. 1 is a perspective view of a portion of a load carrying device according to an example;
Fig. 2 is a perspective view of a portion of a roller according to an example;
Fig. 3 is an exploded view of a portion of a load carrying device according to an example;
Fig. 4 is a schematic drawing of a cross-section of a roller according to an example;
Fig. 5 is a schematic drawing of a cross-section of a roller according to an example;
Fig. 6 is a schematic drawing of a cross-section of a roller according to an example;
Fig. 7a is a side view of a pram according to an example; and
Fig. 7b is a front view of a pram according to an example.

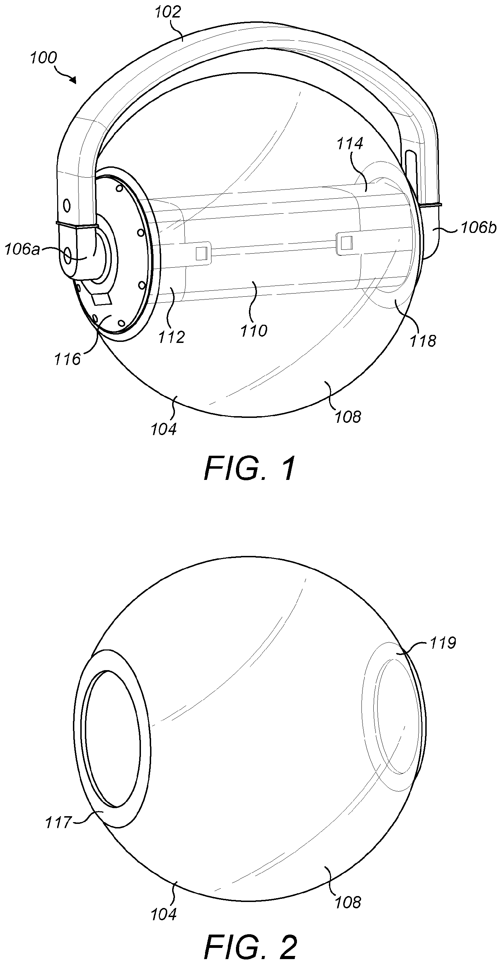

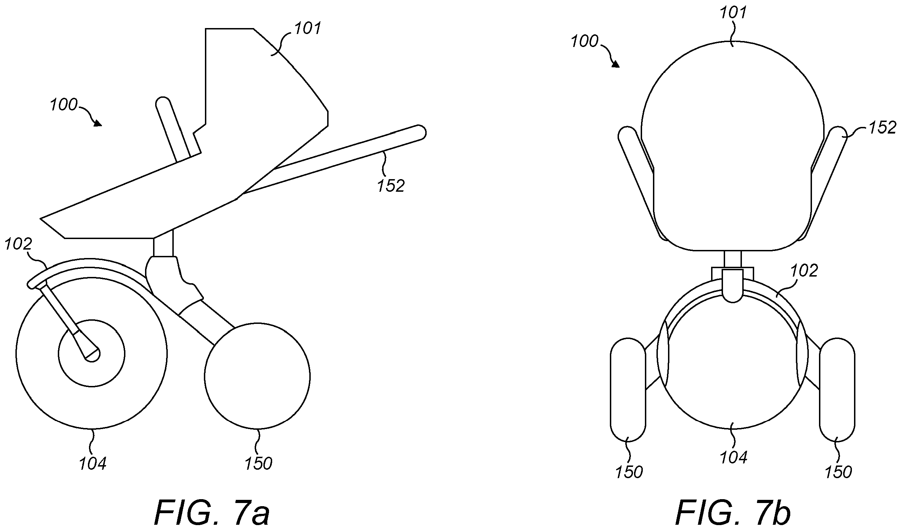

Referring to Fig. 1 there is shown a portion of a load carrying device 100. The load carrying device 100 comprises a load carrying portion, which comprises a frame 102. The load carrying device 100 is described in full below with respect to Fig. 7a and Fig. 7b.

The load carrying device 100 comprises a roller 104. The roller 104 comprises an attachment arrangement 106a 106b, which attaches the roller 104 to the load carrying portion, for example one or more bearings or rotatable joints. The attachment arrangement might also facilitate electrical connection to components with the roller 104, either directly or via apertures/conduits for wires etc. The roller comprises a body 108 and an inflation arrangement 110. The roller 104 is rotatable.

The inflation arrangement 110 is of substantially cuboidal shape. The inflation arrangement 110 provides an axle for the load carrying device 100 and roller 104. The inflation arrangement 110 extends across a width of the roller 104. The inflation arrangement 110 extends across a diameter of the roller 104. The body 108 of the roller 104 rotates relative to the inflation unit 110. The arrangement 106a 106b comprises a first connector 106a and a second connector 106b. The first connector 106a engages a first end of the inflation arrangement 110 while the second connector 106 engages a second end of the inflation arrangement 110, to thereby attach the inflation arrangement 104 to the load carrying portion. Each of the first connector 106a and the second connector 106b comprises a slip ring to provide a connection affording relative rotation between the body 108 and the inflation unit 110.

The inflation arrangement 110 comprises a first end cap 112 at the first end of the inflation arrangement 110. The inflation arrangement 110 comprises a second end cap 114 at the second end of the inflation arrangement 110. The first end cap 112 and second end cap 114 are formed of components separate from a central portion of the inflation arrangement 110. However, it will be appreciated that in other examples, the first end cap 112 and second end cap 114 are integrally formed with the central portion of the inflation arrangement 110.

The first end cap 112 comprises a first guard member 116. The second end cap 114 comprises a second guard member 118. The first and second guard members 116 118 extend outwardly (radially and perpendicular to an axis of rotation of the roller 104) from the inflation arrangement 110. Each of the first and second guard members 116, 118 is of a substantially spherical dome shape.

The roller 104 is a ball, as its body 108 is substantially ball shaped. The body 108 is substantially spherical. The body 108 has a curvature in a direction parallel to the axle which is similar to its curvature in directions normal to the axle. In Fig. 1, the roller 104 is in an inflated state, such that its hollow body 108 is full of air. The body 108 is constructed from a puncture resistant material. The body 108 is constructed from woven nylon reinforced fabric symmetrically coated with uncured polychloroprene rubber.

The roller 104 comprises a plurality of structural members (not shown). Each of the structural members extends circumferentially around the roller 104 when the roller 104 is in the inflated state.

In use, the roller 104 provides support to the load carrying portion, in order to support a load carried by the load carrying portion. It will be appreciated that further support (in addition to the roller 104) is provided to the load carrying portion, as described below with respect to Fig. 7a and Fig. 7b. Therefore, the roller 104 partially supports the load carrying portion. The roller 104 is rotated to move the load carrying device 100.

The inflation arrangement 110 and the axle are substantially horizontal and parallel to a surface which supports the roller 104 (e.g. a floor or surface on which the roller is to roll). The inflation arrangement 110 rotates with the roller 104. Relative rotation occurs between the connectors 106a 106b and the inflation arrangement 110.

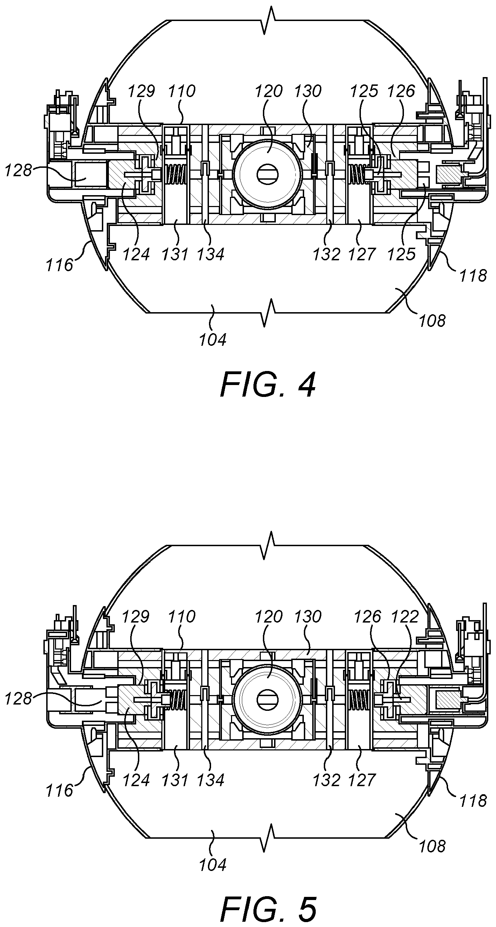

The inflation arrangement 110 is operated to deflate the roller 104 from the inflated state to a deflated state. The inflation arrangement 110 is operated to inflate the roller 104 from the deflated state to the inflated state. The operation of the inflation arrangement 110 to deflate and inflate the roller 104 is described below with respect to Fig. 4 and Fig. 5.

Referring to Fig. 2, there is shown the body 108 of the roller 104. The roller 104 comprises a first port 117 and a second port 119. The first port 117 and the second port 119 are located on opposite sides of the body 108. Each of the first port 117 and the second port 119 is substantially circular. A centre point of the first port 117 is diametrically opposite a centre point of the second port 119 on the body 108. The second port 119 has a diameter which is smaller than a diameter of the first port 117.

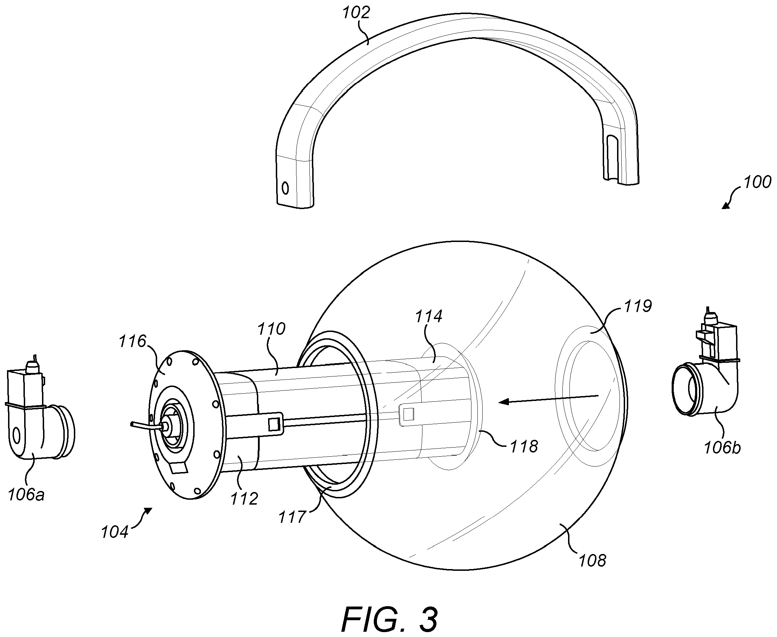

In use, the inflation arrangement 110 is inserted into the roller 104 through the first port 117, as described with reference to Fig. 3. The inflation arrangement 110 is removed from the roller 104 through the first port 117, as described with reference to Fig. 3.

Referring to Fig. 3, there is shown an exploded view of the portion of the load carrying device 100 of Fig. 1. As described above, the roller 104 comprises a first port 117 and a second port 119. The second end cap 114 has a diameter (measured in a direction perpendicular to the axle) which is larger than the second port 119. The second end cap 114 has a diameter which is smaller than the first port 117. It is the second guard member 118 which provides the diameter of the second end cap 114, as the second guard member 118 is the part of the second end cap 114 which extends furthest outwardly from the inflation arrangement 110.

The first end cap 112 has a diameter which is larger than the diameter than the second end cap 114. The first end cap 112 has a diameter which is larger than the first port 117. It is the first guard member 116 which provides the diameter of the first end cap 112, as the first guard member 117 is the part of the first end cap 112 which extends furthest outwardly from the inflation arrangement 110.

In use, as shown in Fig. 3, the inflation arrangement 110 is removed from the roller 104 through the first port 117, as the second end cap 114 passes through the first port 117.

The inflation arrangement 110 is inserted into the roller 104 by inserting the second end cap 114 through the first port 117. The inflation arrangement 110 is inserted until the second end cap 114 abuts the body 108 at the second port 119 and the first end cap 116 abuts the body 108 at the first port 117 (as shown in Fig. 1). The first connector 106a is brought into engagement with the first end cap 112 and the second connector 106b is brought into engagement with the second end cap 114. The first connector 106a and the second connector 106b are connected to the frame 102 to attach the roller 104 to the load carrying portion.

Referring to Fig. 4 and Fig. 5 there are shown schematic drawings of cross-sections of the roller 104. The inflation arrangement 110 comprises a pump 120 located in a chamber 130 of the inflation arrangement 110. The inflation arrangement 110 comprises a motor (not shown) to drive the pump 120. The inflation arrangement 110 is connected to a battery (not shown) to power the motor. The battery is located outside the roller 104 on the frame 102 of the load carrying device 100. The battery is a 24V rechargeable battery.

The inflation arrangement 110 comprises a first valve 122 and a second valve 124. The first valve 122 is a shuttle valve. The second valve 124 is a shuttle valve. The first valve comprises a first valve first opening 125, which is an opening external to the roller 104. The first valve first opening 125 is located at one of the first end cap 112 and the second end cap 114. In the example of Fig. 4 and Fig. 5, the first valve first opening 125 is located in the second end cap 114.

The first valve 122 comprises a first valve second opening 126, which is an opening to a suction side 132 of the chamber 130. The first valve 122 comprises a first valve third opening 127, which is an opening to the body 108 of the roller.

The second valve 124 comprises a second valve first opening 128, which is an opening external to the roller 104. The second valve first opening 128 is located at one of the first end cap 112 and the second end cap 114. In the example of Fig. 4 and Fig. 5, the second valve first opening 128 is located in the first end cap 112. It will be appreciated that in other examples, the chamber 130 of the inflation arrangement 110 is inverted with respect to the rest of the inflation arrangement 110, so that the first valve first opening 125 is located at the second end cap 114 and the second valve first opening 128 is located at the first end cap 112.

The second valve 124 comprises a second valve second opening 129, which is an opening to a pressure side 134 of the chamber 134. The second valve 124 comprises a second valve third opening 131, which is an opening to the body 108.

In use, when the load carrying device 100 is being stored/transported and the roller 104 is in a deflated state (not shown), a shuttle of the first valve 122 and a shuttle of the second valve 124 are in outward positions. This means that the first valve first opening 125 is closed and the second valve first opening 128 is closed. This prevents air flow into and out of the roller 108.

The pump 120 is switched into an inflating mode (as shown in Fig. 4), by pushing the shuttle of the first valve 122 into an inward position and maintaining the shuttle of the second valve 124 in the outward position. The pump 120 is switched into the inflating mode using a switch located on a handle of the load carrying device 100. The switch may communicate wirelessly with the pump 120 and valves 122 124 to switch to the inflating mode.

Pushing the shuttle of the first valve 122 into the inward position opens the first valve first opening 125 and the first valve second opening 126, and closes the first valve third opening 127. Maintaining the shuttle of the second valve 124 in the outward position maintains the second valve second opening 129 and the second valve third opening 131 open and the second valve first opening 128 closed.

The motor drives the pump 120, which draws air from outside through the first valve first opening 125, into the suction side 132 of the chamber 130 through the first valve second opening 126. The pump 120 supplies air to the pressure side 134, thereby supplying air to the body 108 through the second valve second opening 129 and the second valve third opening 131. The inflating mode is automated, such that the inflating mode continues until the body 108 is fully inflated, at which point a pressure sensor (not shown) of the inflation unit 110 senses that the body 108 is fully inflated, the motor switches off and the shuttle of the first valve 122 is returned to the outward position, thereby maintaining the roller 104 in an inflated state. The roller 104 is used to support the load carrying device 100.

The pump 120 is switched into a deflating mode (as shown in Fig. 5), by pushing the shuttle of the second valve 124 into an inward position and maintaining the shuttle of the first valve 122 in the outward position. The pump 120 is switched into the deflating mode using a switch (not shown) located on a handle of the load carrying device 100. The switch may communicate wirelessly with the pump 120 and valves 122 124 to switch to the deflating mode.

Pushing the shuttle of the second valve 124 into the inward position opens the second valve first opening 128 and the second valve second opening 129, and closes the second valve third opening 131. Maintaining the shuttle of the first valve 122 in the outward position maintains the first valve second opening 126 and the first valve third opening 127 open and the first valve first opening 125 closed.

The motor drives the pump 120, which draws air from body 108 through the first valve third opening 127 and the first valve second opening 126, into the suction side 132 of the chamber 130. The pump 120 supplies air to the pressure side 134 thereby supplying air to the outside through the second valve second opening 129 and the second valve first opening 128. The deflating mode is automated, such that the deflating mode continues until the body 108 is fully deflated, at which point the pressure sensor senses that the body 108 is fully deflated, the motor switches off, and the shuttle of the second valve 124 is returned to the outward position, thereby maintaining the roller 104 in a deflated state.

In other words, in the inflating mode, the first valve 122 is closed to the body 108 and is open to the outside. The second valve 124 is closed to the outside and is open to the body 108. The pump 120 draws air from the outside through the first valve 122 into the suction side 132 of the chamber. The pump 120 supplies air into the pressure side 134. Air flows from the pressure side 134 through the second valve 124 into the body 108.

In the deflating mode, the first valve 122 is closed to the outside and is open to the body 108. The second valve 124 is closed to the body 108 and is open to the outside. The pump 120 draws air from the body 108, through the first valve 122 and the suction side 132 of the chamber. The pump 120 supplies air to the pressure side 134 of the chamber. Air flows from the pressure side 134 through the second valve 124 to the outside.

In another example, the inflation and deflation may not require a sensor. Inflation and deflation can be undertaken manually, until a required state of inflation or deflation is achieved. Pushing the shuttle of the first valve 122 may be achieved by pulling a cable (e.g. located on a handle of the load carrying device) in a first direction to activate a first microswitch to push the shuttle of the first valve 122. Pushing the shuttle of the second valve 124 is achieved by pulling a cable in a second direction to activate a second microswitch to push the shuttle of the second valve 124. Pulling the cable in either direction activates the pump. In this example, inflation/deflation occurs while the cable is pulled and until the cable is released.

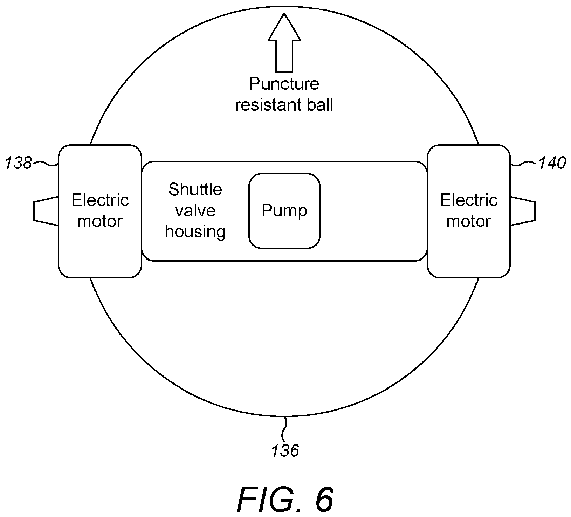

Referring to Fig. 6, there is shown a schematic drawing of a cross-section of a second roller 136. The second roller 136 comprises all of the features of the roller 104. Additionally, the second roller 136 comprises a second motor 138 and a third motor 140. The second motor 138 is located outside the second roller 136 adjacent to the first end cap 112. The third motor 140 is located outside the second roller 136 adjacent to the second end cap 114.

In use, the second motor 138 and the third motor 140 rotate the second roller 136, thereby moving a load carrying device to which the second roller 136 is attached.

Referring to Fig. 7a and Fig. 7b, there is shown the load carrying device 100. The load carrying device 100 is a pram. The pram comprises a load carrying portion 101, which comprises the frame 102. The load carrying portion 101 comprises a child carrying portion. The pram comprises the roller 104 as described above. The roller 104 is located at the front of the pram. The pram comprises a pair of wheels located at the rear of the pram. The pram comprises a handle 152.

In use, the pram is supported by the roller 104 and the pair of wheels 150. The roller 104 can be deflated as described above and the pram folded when storing or transporting the pram.

In the examples described above, the inflation arrangement drives inflation and deflation using the pump. This is advantageous as inflation and deflation takes place quickly and can be controlled easily. However, in other examples, outside of the scope of the claims that follow, simpler/cheaper inflation arrangements can be employed which do not use a pump. For example, the inflation arrangement may comprise a compressible foam (or other biasing means) which inflates the roller when a valve is open, and may be compressed (e.g. manually) by a user to deflate the roller when the valve is open. When using such an inflation arrangement, the valve can be closed to maintain the roller in an inflated or deflated state. Alternatively, the inflation arrangement may comprise a foldable structure for expanding and compressing the body 108, for example in the manner in which a typical umbrella/umbrella frame operates. In this situation, the body 108 need not be sealed, and the inflation is achieved by the folding of the structure rather than the pressure within the body 108. That is, in this latter example, inflation and deflation refer to expansion and compression of the overall size or shape of the body, and do not necessarily involve or required the use or air or similar. The expansion and compression can be purely or largely mechanical.

Although a few preferred embodiments have been shown and described, it will be appreciated by those skilled in the art that various changes and modifications might be made without departing from the scope of the invention, as defined in the appended claims.

## Claims

1. A load carrying device (100) comprising a load carrying portion (102), a roller (104) and an inflation arrangement (110), comprising a pump, in connection with the roller for selectively inflating the roller from a deflated state to an inflated state and for selectively deflating the roller from the inflated state to the deflated state, the roller rotatable to allow movement of the load carrying device, the roller being a ball, wherein the inflation arrangement provides the axle for the ball, the roller comprising:
an attachment arrangement (106a, 106b) attaching the roller to the load carrying portion so that the roller provides support to the load carrying portion; and
a body (108) for contacting a surface on which the load carrying device is located.

2. A load carrying device according to claim 1, wherein the inflation arrangement comprises a first guard member (116) on a first end cap (112) of the inflation arrangement and/or a second guard member (118) on a second end cap (114) of the inflation arrangement, the first guard member and/or second guard member extending outwardly from the inflation arrangement to protect the inflation arrangement from impact.

3. A load carrying device according to any preceding claim, wherein the inflation arrangement (110) is a module removable from the roller.

4. A load carrying device according to claim 3, wherein the body of the roller comprises a first port (117), the inflation arrangement insertable into and removable from the roller through the first port,
and, optionally,
wherein the body of the roller comprises a second port (119), wherein a first end cap of the inflation arrangement is located at the first port and a second end cap of the inflation arrangement is located at the second port.

5. A load carrying device according to claim 4, wherein the second end cap (114) has a larger diameter than the second port and a smaller diameter than the first port,
and, optionally,
wherein the first end cap has a larger diameter than the first port.

6. A load carrying device according to any preceding claim, wherein the inflation arrangement comprises first and second valves (122, 124), the pump switchable between:
an inflating mode, wherein the pump supplies air to the body through the first and second valves to inflate the roller; and
a deflating mode, wherein the pump (120) draws air from the body through the second and first valves to deflate the roller.

7. A load carrying device according to claim 6, wherein the first and second valves are shuttle valves, the first valve comprising:
a first valve first opening (125), opening external to the roller;
a first valve second opening (126), opening to a suction side of the pump; and
a first valve third opening (127), opening to the body,
wherein the second valve comprises:
a second valve first opening (128), opening external to the roller;
a second valve second opening (129), opening to a pressure side of the pump; and
a second valve third opening (131), opening to the body,
wherein in the inflating mode, the first valve (122) permits fluid flow between the first valve first opening and the first valve second opening and the second valve permits fluid flow between the second valve second opening and the second valve third opening, and,
in the deflating mode, the first valve permits fluid flow between the first valve third opening and the first valve second opening and the second valve permits fluid flow between the second valve second opening and the second valve first opening.

8. A load carrying device according to claim 6 or 7, wherein the first valve (122) and second valves (124) are operable by mechanical linkage.

9. A load carrying device according to any of claims 6 to 8, wherein each of the first valve and the second valve is located in a respective one of a first end cap and a second end cap of the inflation arrangement.

10. A load carrying device according to any preceding claim, wherein the pump (120) is driven by a first motor and operation of the first motor is controlled by a pressure sensor,
and/or, optionally,
the load carrying device comprises a second motor operable to rotate the roller to move the load carrying device,
and/or, optionally,
the load carrying device comprises a third motor operable to rotate the roller to move the load carrying device, wherein the second motor is located at a first end cap of the inflation arrangement and the third motor is located at a second end cap of the inflation arrangement.

11. A load carrying device according to any preceding claim, wherein the roller comprises a plurality of structural members,
and, optionally,
wherein each of the structural member extends circumferentially around the roller when the roller is in the inflated state,
and/or, optionally,
wherein each of the structural members extends parallel to the inflation arrangement when the ball is in the deflated state.

12. A load carrying device according to any preceding claim, wherein the body is made from a puncture resistant material.

13. A load carrying device according to any preceding claim, wherein the load carrying device (100) is a pram or a golf trolley.

14. A kit of parts for a load carrying device (100), the load carrying device comprising a load carrying portion (102) and a roller (104), the kit of parts comprising:
an attachment arrangement (106a, 106b) for attaching the roller to the load carrying portion so that the roller provides support to the load carrying portion;
a body (108) of the roller for contacting a surface on which the load carrying device is located; and
an inflation arrangement (110), comprising a pump, in connection with the roller for selectively inflating the roller from a deflated state to an inflated state and selectively deflating the roller from the inflated state to the deflated state,
wherein the roller is rotatable in use to allow movement of the load carrying device, the roller being a ball, wherein the inflation arrangement provides the axle for the ball.

15. A roller (104) for a load carrying device (100), the roller comprising:
an arrangement (106a, 106b) for attaching the roller to a load carrying portion of the load carrying device so that the roller provides support to the load carrying portion;
a body (108) for contacting a surface on which the load carrying device is located; and
an inflation arrangement (110), comprising a pump, for selectively inflating the roller from a deflated state to an inflated state and selectively deflating the roller from the inflated state to the deflated state,
wherein the roller is rotatable in use to allow movement of the load carrying device, the roller being a ball, wherein the inflation arrangement provides the axle for the ball.

## Patentansprüche

1. Lasttragvorrichtung (100), umfassend einen Lasttragabschnitt (102), eine Rolle (104) und eine Aufblasanordnung (110), umfassend eine Pumpe in Verbindung mit der Rolle zum selektiven Aufblasen der Rolle von einem entleerten Zustand in einen aufgeblasenen Zustand und zum selektiven Entleeren der Rolle vom aufgeblasenen Zustand in den entleerten Zustand, wobei die Rolle drehbar ist, um eine Bewegung der Lasttragvorrichtung zu ermöglichen, wobei die Rolle eine Kugel ist, wobei die Aufblasanordnung die Achse für die Kugel bereitstellt, wobei die Rolle umfasst:
eine Befestigungsanordnung (106a, 106b), die die Rolle an dem Lasttragabschnitt befestigt, sodass die Rolle dem Lasttragabschnitt eine Stütze bietet; und
einen Körper (108) zum Berühren einer Oberfläche, auf der sich die Lasttragvorrichtung befindet.

2. Lasttragvorrichtung gemäß Anspruch 1, wobei die Aufblasanordnung ein erstes Schutzelement (116) an einer ersten Endkappe (112) der Aufblasanordnung und/oder ein zweites Schutzelement (118) an einer zweiten Endkappe (114) der Aufblasanordnung umfasst, wobei sich das erste Schutzelement und/oder das zweite Schutzelement von der Aufblasanordnung nach außen erstreckt, um die Aufblasanordnung vor Stößen zu schützen.

3. Lasttragvorrichtung gemäß einem der vorhergehenden Ansprüche, wobei die Aufblasanordnung (110) ein von der Rolle abnehmbares Modul ist.

4. Lasttragvorrichtung gemäß Anspruch 3, wobei der Körper der Rolle eine erste Zugangsöffnung (117) aufweist, wobei die Aufblasanordnung durch die erste Zugangsöffnung in die Rolle einführbar und aus ihr herausnehmbar ist, und gegebenenfalls,
wobei der Körper der Rolle eine zweite Zugangsöffnung (119) aufweist, wobei sich eine erste Endkappe der Aufblasanordnung an der ersten Zugangsöffnung und eine zweite Endkappe der Aufblasanordnung an der zweiten Zugangsöffnung befindet.

5. Lasttragvorrichtung gemäß Anspruch 4, wobei die zweite Endkappe (114) einen größeren Durchmesser als die zweite Zugangsöffnung und einen kleineren Durchmesser als die erste Zugangsöffnung aufweist,
und gegebenenfalls,
wobei die erste Endkappe einen größeren Durchmesser als die erste Zugangsöffnung aufweist.

6. Lasttragvorrichtung gemäß einem der vorhergehenden Ansprüche, wobei die Aufblasanordnung ein erstes und ein zweites Ventil (122, 124) umfasst, wobei die Pumpe umschaltbar ist zwischen:
einem Aufblasmodus, bei dem die Pumpe dem Körper über das erste und das zweite Ventil Luft zuführt, um die Rolle aufzublasen; und
einen Entleerungsmodus, bei dem die Pumpe (120) Luft aus dem Körper über das zweite und das erste Ventil ansaugt, um die Rolle zu entleeren.

7. Lasttragvorrichtung gemäß Anspruch 6, wobei das erste und das zweite Ventil Wechselventile sind, wobei das erste Ventil umfasst:
eine erste Öffnung des ersten Ventils (125), die sich nach außerhalb der Rolle öffnet;
eine zweite Öffnung des ersten Ventils (126), die sich zu einer Saugseite der Pumpe hin öffnet; und
eine dritte Öffnung des ersten Ventils (127), die sich zum Körper hin öffnet,
wobei das zweite Ventil umfasst:
eine erste Öffnung des zweiten Ventils (128), die sich nach außerhalb der Rolle öffnet;
eine zweite Öffnung des zweiten Ventils (129), die sich zu einer Druckseite der Pumpe hin öffnet; und
eine dritte Öffnung des zweiten Ventils (131), die sich zum Körper hin öffnet,
wobei im Aufblasmodus das erste Ventil (122) einen Fluidstrom zwischen der ersten Öffnung des ersten Ventils und der zweiten Öffnung des ersten Ventils ermöglicht und das zweite Ventil einen Fluidstrom zwischen der zweiten Öffnung des zweiten Ventils und der dritten Öffnung des zweiten Ventils ermöglicht, und,
im Entleerungsmodus das erste Ventil einen Fluidstrom zwischen der dritten Öffnung des ersten Ventils und der zweiten Öffnung des ersten Ventils ermöglicht und das zweite Ventil einen Fluidstrom zwischen der zweiten Öffnung des zweiten Ventils und der ersten Öffnung des zweiten Ventils ermöglicht.

8. Lasttragvorrichtung gemäß Anspruch 6 oder 7, wobei das erste Ventil (122) und das zweite Ventil (124) durch ein mechanisches Gestänge betätigbar sind.

9. Lasttragvorrichtung gemäß einem der Ansprüche 6 bis 8, wobei sich das erste Ventil und das zweite Ventil jeweils in einer ersten Endkappe bzw. einer zweiten Endkappe der Aufblasanordnung befinden.

10. Lasttragvorrichtung gemäß einem der vorhergehenden Ansprüche, wobei die Pumpe (120) durch einen ersten Motor angetrieben wird und der Betrieb des ersten Motors durch einen Drucksensor gesteuert wird,
und/oder gegebenenfalls
die Lasttragvorrichtung einen zweiten Motor umfasst, der dazu betreibbar ist, die Rolle zu drehen, um die Lasttragvorrichtung zu bewegen,
und/oder gegebenenfalls
die Lasttragvorrichtung einen dritten Motor umfasst, der dazu betreibbar ist, die Rolle zu drehen, um die Lasttragvorrichtung zu bewegen, wobei sich der zweite Motor an einer ersten Endkappe der Aufblasanordnung befindet und sich der dritte Motor an einer zweiten Endkappe der Aufblasanordnung befindet.

11. Lasttragvorrichtung gemäß einem der vorhergehenden Ansprüche, wobei die Rolle eine Vielzahl von Strukturelementen umfasst,
und gegebenenfalls,
wobei sich jedes der Strukturelemente in Umfangsrichtung um die Rolle herum erstreckt, wenn sich die Rolle im aufgeblasenen Zustand befindet,
und/oder gegebenenfalls,
wobei sich jedes der Strukturelemente parallel zur Aufblasanordnung erstreckt, wenn sich die Kugel im entleerten Zustand befindet.

12. Lasttragvorrichtung gemäß einem der vorhergehenden Ansprüche, wobei der Körper aus einem durchstoßfesten Material hergestellt ist.

13. Lasttragvorrichtung gemäß einem der vorhergehenden Ansprüche, wobei die Lasttragvorrichtung (100) ein Kinderwagen oder ein Golfwagen ist.

14. Teilesatz für eine Lasttragvorrichtung (100), wobei die Lasttragvorrichtung einen Lasttragabschnitt (102) und eine Rolle (104) umfasst, wobei der Teilesatz umfasst:
eine Befestigungsanordnung (106a, 106b) zum Befestigen der Rolle an dem Lasttragabschnitt, sodass die Rolle dem Lasttragabschnitt eine Stütze bietet;
einen Körper (108) der Rolle zum Berühren einer Oberfläche, auf der sich die Lasttragvorrichtung befindet; und
eine Aufblasanordnung (110), die eine Pumpe in Verbindung mit der Rolle zum selektiven Aufblasen der Rolle von einem entleerten Zustand in einen aufgeblasenen Zustand und zum selektiven Entleeren der Rolle vom aufgeblasenen Zustand in den entleerten Zustand umfasst,
wobei die Rolle im Gebrauch drehbar ist, um eine Bewegung der Lasttragvorrichtung zu ermöglichen, wobei die Rolle eine Kugel ist, wobei die Aufblasanordnung die Achse für die Kugel bereitstellt.

15. Rolle (104) für eine Lasttragvorrichtung (100), wobei die Rolle umfasst:
eine Anordnung (106a, 106b) zum Befestigen der Rolle an einem Lasttragabschnitt der Lasttragvorrichtung, sodass die Rolle eine Stütze für den Lasttragabschnitt bietet;
einen Körper (108) zum Berühren einer Oberfläche, auf der sich die Lasttragvorrichtung befindet; und
eine Aufblasanordnung (110), die eine Pumpe zum selektiven Aufblasen der Rolle von einem entleerten Zustand in einen aufgeblasenen Zustand und zum selektiven Entleeren der Rolle vom aufgeblasenen Zustand in den entleerten Zustand umfasst,
wobei die Rolle im Gebrauch drehbar ist, um eine Bewegung der Lasttragvorrichtung zu ermöglichen, wobei die Rolle eine Kugel ist, wobei die Aufblasanordnung die Achse für die Kugel bereitstellt.

## Revendications

1. Dispositif (100) de transport de charge comportant une partie (102) de transport de charge, un organe (104) de roulement et un agencement (110) de gonflage, comportant une pompe, en liaison avec l'organe de roulement pour gonfler sélectivement l'organe de roulement d'un état dégonflé à un état gonflé et pour dégonfler sélectivement l'organe de roulement de l'état gonflé à l'état dégonflé, l'organe de roulement pouvant tourner pour permettre un mouvement du dispositif de transport de charge, l'organe de roulement étant une boule, l'agencement de gonflage constituant l'essieu pour la boule, l'organe de roulement comportant :
un agencement (106a, 106b) de fixation fixant l'organe de roulement à la partie de transport de charge de telle sorte que l'organe de roulement assure un soutien de la partie de transport de charge ; et
un corps (108) servant à entrer en contact avec une surface sur laquelle est situé le dispositif de transport de charge.

2. Dispositif de transport de charge selon la revendication 1, l'agencement de gonflage comportant un premier élément (116) de protection sur un premier bouchon (112) d'extrémité de l'agencement de gonflage et/ou un deuxième élément (118) de protection sur un deuxième bouchon (114) d'extrémité de l'agencement de gonflage, le premier élément de protection et/ou le deuxième élément de protection s'étendant vers l'extérieur à partir de l'agencement de gonflage pour protéger l'agencement de gonflage d'un impact.

3. Dispositif de transport de charge selon l'une quelconque des revendications précédentes, l'agencement (110) de gonflage étant un module qui peut être retiré de l'organe de roulement.

4. Dispositif de transport de charge selon la revendication 3, le corps de l'organe de roulement comportant un premier orifice (117), l'agencement de gonflage pouvant être inséré dans et retiré de l'organe de roulement à travers le premier orifice,
et, optionnellement,
le corps de l'organe de roulement comportant un deuxième orifice (119), un premier bouchon d'extrémité de l'agencement de gonflage étant situé au niveau du premier orifice et un deuxième bouchon d'extrémité de l'agencement de gonflage étant situé au niveau du deuxième orifice.

5. Dispositif de transport de charge selon la revendication 4, le deuxième bouchon (114) d'extrémité présentant un plus grand diamètre que le deuxième orifice et un plus petit diamètre que le premier orifice,
et, optionnellement,
le premier bouchon d'extrémité présentant un plus grand diamètre que le premier orifice.

6. Dispositif de transport de charge selon l'une quelconque des revendications précédentes, l'agencement de gonflage comportant des première et deuxième soupapes (122, 124), la pompe étant commutable entre :
un mode de gonflage, dans lequel la pompe fournit de l'air au corps à travers les première et deuxième soupapes pour gonfler l'organe de roulement, et
un mode de dégonflage, dans lequel la pompe (120) aspire de l'air à partir du corps à travers les deuxième et première soupapes pour dégonfler l'organe de roulement.

7. Dispositif de transport de charge selon la revendication 6, les première et deuxième soupapes étant des clapets-navettes, la première soupape comportant :
une première ouverture (125) de première soupape, s'ouvrant sur l'extérieur de l'organe de roulement ;
une deuxième ouverture (126) de première soupape, s'ouvrant sur un côté aspiration de la pompe ; et
une troisième ouverture (127) de première soupape, s'ouvrant sur le corps, la deuxième soupape comportant :
une première ouverture (128) de deuxième soupape, s'ouvrant sur l'extérieur de l'organe de roulement ;
une deuxième ouverture (129) de deuxième soupape, s'ouvrant sur un côté pression de la pompe ; et
une troisième ouverture (131) de deuxième soupape, s'ouvrant sur le corps,
dans le mode de gonflage, la première soupape (122) permettant un écoulement de fluide entre la première ouverture de première soupape et la deuxième ouverture de première soupape et la deuxième soupape permettant un écoulement de fluide entre la deuxième ouverture de deuxième soupape et la troisième ouverture de deuxième soupape, et,
dans le mode de dégonflage, la première soupape permettant un écoulement de fluide entre la troisième ouverture de première soupape et la deuxième ouverture de première soupape et la deuxième soupape permettant un écoulement de fluide entre la deuxième ouverture de deuxième soupape et la première ouverture de deuxième soupape.

8. Dispositif de transport de charge selon la revendication 6 ou 7, la première soupape (122) et la deuxième soupape (124) pouvant être actionnées par liaison mécanique.

9. Dispositif de transport de charge selon l'une quelconque des revendications 6 à 8, chacune de la première soupape et de la deuxième soupape étant située dans un bouchon respectif parmi un premier bouchon d'extrémité et un deuxième bouchon d'extrémité de l'agencement de gonflage.

10. Dispositif de transport de charge selon l'une quelconque des revendications précédentes, la pompe (120) étant entraînée par un premier moteur et le fonctionnement du premier moteur étant commandé par un capteur de pression,
et/ou, optionnellement,
le dispositif de transport de charge comportant un deuxième moteur utilisable pour faire tourner l'organe de roulement afin de déplacer le dispositif de transport de charge,
et/ou, optionnellement,
le dispositif de transport de charge comportant un troisième moteur utilisable pour faire tourner l'organe de roulement afin de déplacer le dispositif de transport de charge, le deuxième moteur étant situé au niveau d'un premier bouchon d'extrémité de l'agencement de gonflage et le troisième moteur étant situé au niveau d'un deuxième bouchon d'extrémité de l'agencement de gonflage.

11. Dispositif de transport de charge selon l'une quelconque des revendications précédentes, l'organe de roulement comportant une pluralité d'éléments structuraux,
et, optionnellement,
chacun des éléments structuraux s'étendant circonférentiellement autour de l'organe de roulement lorsque l'organe de roulement est dans l'état gonflé, et/ou, optionnellement,
chacun des éléments structuraux s'étendant parallèlement à l'agencement de gonflage lorsque la boule est dans l'état dégonflé.

12. Dispositif de transport de charge selon l'une quelconque des revendications précédentes, le corps étant constitué d'un matériau résistant aux perforations.

13. Dispositif de transport de charge selon l'une quelconque des revendications précédentes, le dispositif (100) de transport de charge étant une poussette ou un chariot de golf.

14. Kit de pièces pour un dispositif (100) de transport de charge, le dispositif de transport de charge comportant une partie (102) de transport de charge et un organe (104) de roulement, le kit de pièces comportant :
un agencement (106a, 106b) de fixation servant à fixer l'organe de roulement à la partie de transport de charge de telle sorte que l'organe de roulement assure un soutien de la partie de transport de charge ;
un corps (108) de l'organe de roulement servant à entrer en contact avec une surface sur laquelle est situé le dispositif de transport de charge ; et
un agencement (110) de gonflage, comportant une pompe, en liaison avec l'organe de roulement pour gonfler sélectivement l'organe de roulement d'un état dégonflé à un état gonflé et dégonfler sélectivement l'organe de roulement de l'état gonflé à l'état dégonflé,
l'organe de roulement pouvant tourner en cours d'utilisation pour permettre un mouvement du dispositif de transport de charge, l'organe de roulement étant une boule, l'agencement de gonflage constituant l'essieu pour la boule.

15. Organe (104) de roulement pour un dispositif (100) de transport de charge, l'organe de roulement comportant :
un arrangement (106a, 106b) servant à fixer l'organe de roulement à une partie de transport de charge du dispositif de transport de charge de telle sorte que l'organe de roulement assure un soutien de la partie de transport de charge ;
un corps (108) servant à entrer en contact avec une surface sur laquelle est situé le dispositif de transport de charge ; et
un agencement (110) de gonflage, comportant une pompe, servant à gonfler sélectivement l'organe de roulement d'un état dégonflé à un état gonflé et à dégonfler sélectivement l'organe de roulement de l'état gonflé à l'état dégonflé,
l'organe de roulement pouvant tourner en cours d'utilisation pour permettre un mouvement du dispositif de transport de charge, l'organe de roulement étant une boule, l'agencement de gonflage constituant l'essieu pour la boule.
